# EUROPEAN PATENT APPLICATION

(11) **EP 3 235 565 A1**
(43) Date of publication of application: **25.10.2017**
(21) Application number: 15870037.7
(22) Date of filing: 16.12.2015
(51) Int. Cl.: B01J 35/04, B01D 39/20, B01D 46/00

(54) **HONEYCOMB STRUCTURED BODY**

(30) Priority: 17.12.2014 JP 2014255508
(71) Applicant: Sumitomo Chemical Company, Ltd., Chuo-ku Tokyo 104-8260 (JP)
(72) Inventor: IKAWA Hiroyuki, Tsukuba-shi Ibaraki 300-2655 (JP); INOUE Masashi, Niihama-shi Ehime 792-8521 (JP); KOIDE Nobuyuki, Nikaho-shi Akita 018-0402 (JP)
(74) Representative: Vossius & Partner Patentanwälte Rechtsanwälte mbB
(86) International application number: PCT/JP2015/085279
(87) International publication number: WO 2016/098835

(57) **Abstract**

A column-shaped porous honeycomb structured body forms a plurality of first flow passages that are opened on one end face and closed on the other end face and a plurality of second flow passages that are closed on the one end face and opened on the other end face. The honeycomb structured body comprises: central partition walls where sectional areas of each first flow passage and each second flow passage are individually constant in an axial direction; and other-end-side inclined partition walls where the sectional area of each first flow passage is shrunk and the sectional area of each second flow passage is expanded from the central partition walls to the other end face. An axial-directional length of the other-end-side inclined partition wall is 4 mm or more.

## Description

### Technical Field

The present invention relates to a honeycomb structured body.

### Background Art

There is conventionally known a honeycomb structured body in which flow passages as closing targets are closed not by closing with plugs but by deforming partition walls, that is, by inclining the partition walls at an end part in such a way as to expand the sectional areas of flow passages adjacent to the flow passages as the closing targets.

### Citation List

### Patent Literature

Patent Literature 1: Japanese Unexamined Patent Publication No. 2003-166410
Patent Literature 2: Japanese Unexamined Patent Publication No. 2003-49631

### Summary of Invention

### Technical Problem

Although it is expected that such a honeycomb structured body achieves a smaller pressure loss as compared with a honeycomb structured body closed with plugs, the effect of reducing a pressure loss is not sufficient.

The present invention is devised in view of the aforementioned problem, and an object thereof is to provide a honeycomb structured body high in effect of reducing a pressure loss.

### Solution to Problem

A honeycomb structured body according to the present invention is a column-shaped porous honeycomb structured body which forms a plurality of first flow passages that are opened on one end face and closed on the other end face and a plurality of second flow passages that are closed on the one end face and opened on the other end face. This honeycomb structured body comprises: central partition walls where sectional areas of each first flow passage and each second flow passage are individually constant in an axial direction; and other-end-side inclined partition walls where the sectional area of each first flow passage is shrunk and the sectional area of each second flow passage is expanded from the central partition walls toward the other end face. Further, an axial-directional length of the other-end-side inclined partition wall is 4 mm or more.

According to the present invention, since the axial-directional length of the other-end-side inclined partition wall is secured to be 4 mm or more, an effect of reducing a pressure loss by means of inclined surfaces of the inclined partition walls can be sufficiently secured.

Here, since even if the axial-directional length of the other-end-face-side inclined partition wall is made too large, their production becomes difficult, and in addition, the effect of reducing a pressure loss is not improved very much, it is preferable that the axial-directional length of the other-end-side inclined partition wall be 20 mm or less.

Moreover, the honeycomb structured body further comprises one-end-side inclined partition walls where the sectional area of each first flow passage is expanded and the sectional area of each second flow passage is shrunk from the central partition walls toward the one end face.

Moreover, the one end face can be an inlet side of gas and the other end face can be an outlet side of the gas.

### Advantageous Effects of Invention

According to the present invention, a honeycomb structured body high in effect of reducing a pressure loss is provided.

### Brief Description of Drawings

[Figure 1] Figure 1 is a perspective view of a honeycomb filter 100 according to a first embodiment.
[Figure 2] Figure 2 is a cross-sectional view of central partition walls 10_{cent} of a honeycomb structured body 10 taken along II-II in Figure 1.
[Figure 3] Figure 3(a) is an expanded view of an end face of an inlet (one-end-side) end face 10Eᵢₙ in Figure 1, and Figure 3(b) is a cross-sectional view taken along b-b in Figure 3(a).
[Figure 4] Figure 4(a) is an expanded view of an end face of an outlet (other-end-side) end face 10Eₒᵤₜ in Figure 1, and Figure 4(b) is a cross-sectional view taken along b-b in Figure 4(a)
[Figure 5] Figure 5 is a schematic diagram showing a method for producing a honeycomb filter according to the first embodiment.

### Description of Embodiments

A first embodiment of the present invention is described with reference to the drawings.

### (First Embodiment)

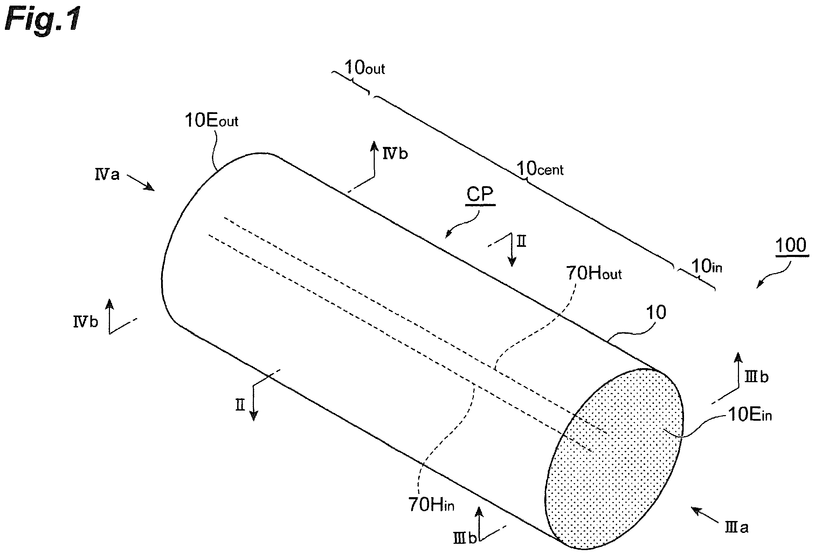

A honeycomb filter 100 according to the embodiment includes a column-shaped porous honeycomb structured body 10 as shown in Figure 1. The honeycomb structured body 10 has an inlet end face (one end face) 10Eᵢₙ and an outlet end face (the other end face) 10Eₒᵤₜ. The honeycomb structured body 10 forms a plurality of inlet flow passages (plurality of first flow passages) 70Hᵢₙ that are opened on the inlet end face 10Eᵢₙ and closed on the outlet end face 10Eₒᵤₜ, and a plurality of outlet flow passages (plurality of second flow passages) 70Hₒᵤₜ that are closed on the inlet end face 10Eᵢₙ and opened on the outlet end face 10Eₒᵤₜ, and these flow passages extend in the axial direction of the honeycomb structured body 10. Moreover, the honeycomb structured body 10 has inlet-side inclined partition walls (one-end-side inclined partition walls) 10ᵢₙ having the inlet end face 10Eᵢₙ, outlet-side inclined partition walls (other-end-side inclined partition walls) 10ₒᵤₜ having the outlet end face 10Eₒᵤₜ, and central partition walls 10_{cent} between these.

The outer diameter of the honeycomb structured body 10 can be set, for example, to be 50 to 250 mm. The axial-directional length of the honeycomb structured body 10 can be set, for example, to be 50 to 300 mm.

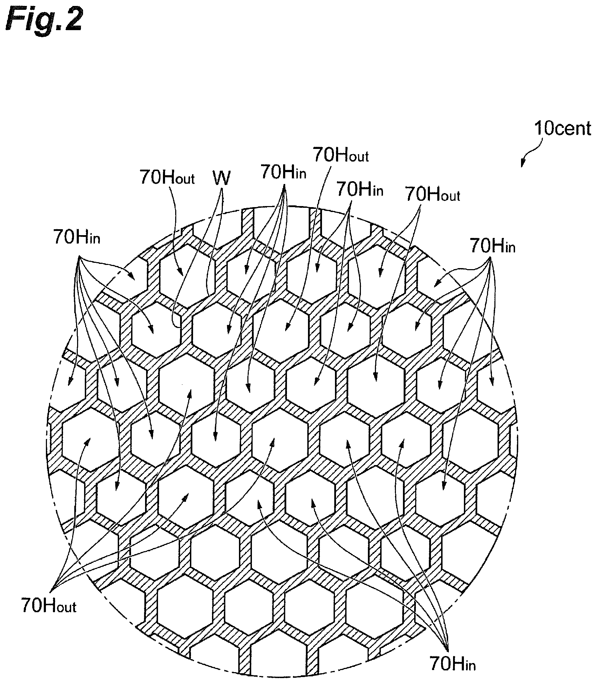

Figure 2 is a cross-section of the central partition walls 10_{cent} of the honeycomb structured body 10. The central partition walls 10_{cent} form many inlet flow passages 70Hᵢₙ and many outlet flow passages 70Hₒᵤₜ sectional areas of which are individually substantially constant along the axial direction. In the embodiment, the inlet flow passages 70Hᵢₙ and the outlet flow passages 70Hₒᵤₜ are regularly arranged in such a way that in the central partition walls 10_{cent}, one inlet flow passage 70Hᵢₙ is adjacent to three other inlet flow passages 70Hᵢₙ and adjacent to three outlet flow passages 70Hₒᵤₜ. One outlet flow passage 70Hₒᵤₜ is adjacent to six inlet flow passages 70Hᵢₙ and not adjacent to the other outlet flow passages 70Hₒᵤₜ. Each flow passage is adjacent to totally six flow passages respectively via the partition walls. In the central partition walls 10_{cent}, the sectional shapes of the inlet flow passages 70Hᵢₙ and the outlet flow passages 70Hₒᵤₜ are substantially hexagonal. The thickness of a portion W that separates two flow passages in the central partition wall 10_{cent} can be set, for example, to be 0.10 to 0.35 mm. The density of the flow passages can be set, for example, to be 150 to 400 cpsi.

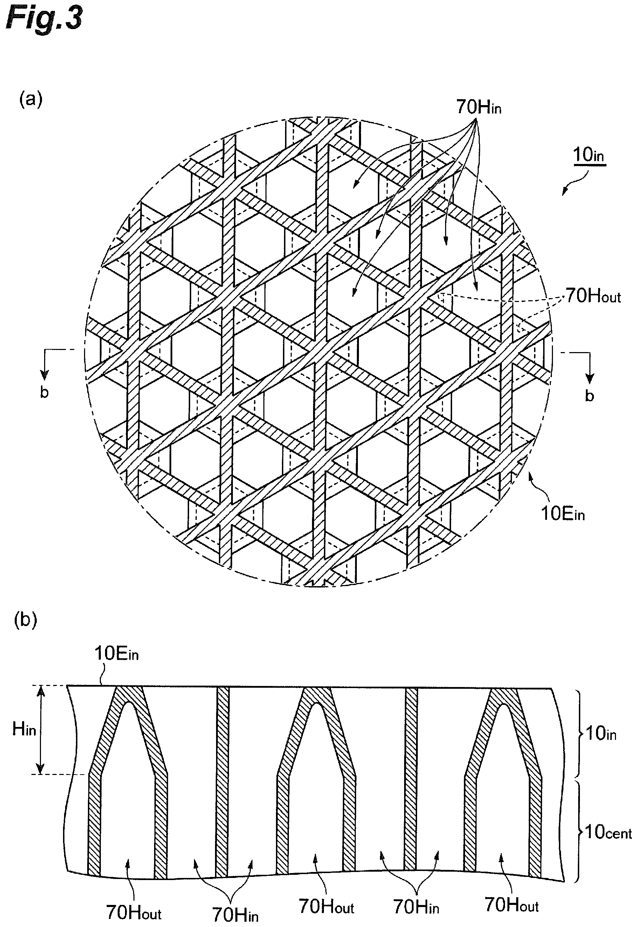

Next, referring to Figure 3(a) and Figure 3(b), a structure of the inlet-side inclined partition walls (one-end-side inclined partition walls) 10ᵢₙ is shown. The inlet-side inclined partition walls 10ᵢₙ are inclined relative to the axis of the inlet flow passages 70Hᵢₙ and the outlet flow passages 70Hₒᵤₜ in such a way as to gradually expand the sectional areas of the inlet flow passages 70Hᵢₙ and to gradually shrink and close the sectional areas of the outlet flow passages 70Hₒᵤₜ as compared with the central partition walls 10_{cent}, from the central partition walls 10_{cent} toward the inlet end face 10Eᵢₙ. Specifically, the inlet-side inclined partition walls 10ᵢₙ gradually expand the sectional areas of the inlet flow passages 70Hᵢₙ which are substantially hexagonal in the central partition walls 10_{cent} and make the sectional shapes triangular on the inlet end face 10Eᵢₙ, and make the sectional areas of the outlet flow passages 70Hₒᵤₜ 0 before reaching the inlet end face 10Eᵢₙ, from the central partition walls 10_{cent} toward the inlet end face 10Eᵢₙ. On the inlet end face 10Eᵢₙ, the vertices of each triangle forming the expanded inlet flow passage 70Hᵢₙ reach the centers of the outlet flow passages 70Hₒᵤₜ, and in this way, the outlet flow passages 70Hₒᵤₜ are closed. In the inlet-side inclined partition walls 10ᵢₙ, the thickness of a plate-like portion separating two flow passages can be set, for example, to be 0.10 to 0.35 mm. This thickness can be a thickness within ±10% relative to the thickness of the partition wall in the central partition walls 10_{cent}.

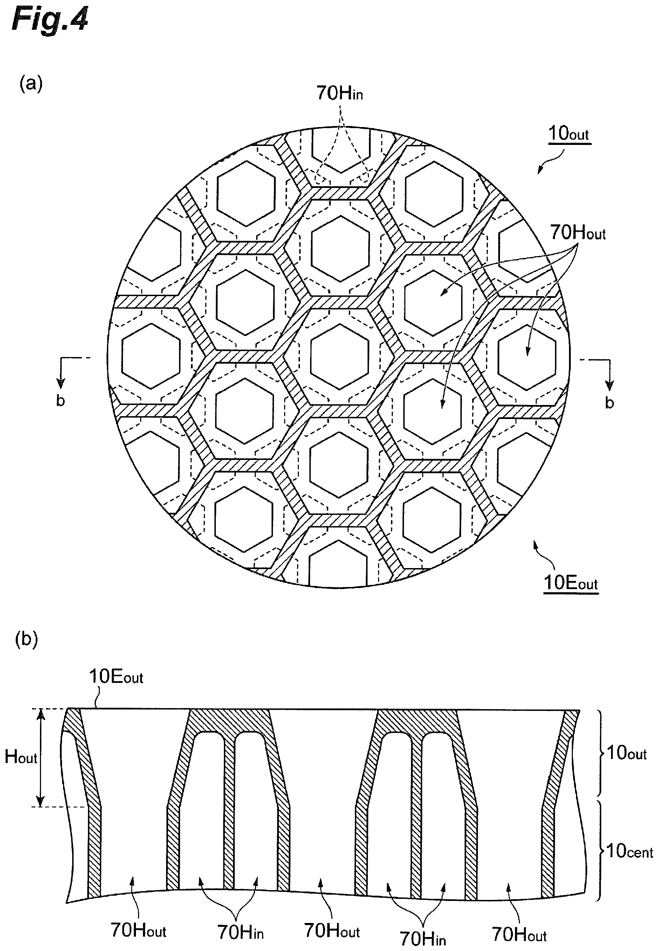

Next, referring to Figure 4(a) and Figure 4(b), a structure of the outlet-side inclined partition walls (other-end-side inclined partition walls) 10ₒᵤₜ is shown. The outlet-side inclined partition walls 10ₒᵤₜ are inclined relative to the axis of the inlet flow passages 70Hᵢₙ and the outlet flow passages 70Hₒᵤₜ in such a way as to gradually expand the sectional areas of the outlet flow passages 70Hₒᵤₜ and to gradually shrink and close the sectional areas of the inlet flow passages 70Hᵢₙ as compared with the central partition walls 10_{cent}, from the central partition walls 10_{cent} toward the outlet end face 10Eₒᵤₜ. Specifically, the outlet-side inclined partition walls 10ₒᵤₜ gradually expand the sectional areas of the outlet flow passages 70Hₒᵤₜ which are substantially hexagonal in the central partition walls 10_{cent} into hexagons, side portions of each of the outlet flow passages 70Hₒᵤₜ becoming the corners of the hexagon, and make the sectional areas of the outlet flow passages 70Hₒᵤₜ 0 before reaching the outlet end face 10Eₒᵤₜ, from the central partition walls 10_{cent} to the outlet end face 10Eₒᵤₜ. On the outlet end face 10Eₒᵤₜ, the vertices of each hexagon of the expanded outlet flow passage 70Hₒᵤₜ reach the vicinities of the centers of the inlet flow passages 70Hᵢₙ, and in this way, the inlet flow passages 70Hᵢₙ are closed. In the outlet-side inclined partition walls 10ₒᵤₜ, the thickness of a plate-like portion separating two flow passages can be set, for example, to be 0.10 to 0.8 mm. This thickness can set to be a thickness equivalent to (for example, not less than 0.9 times) the thickness of the partition wall in the central partition walls 10_{cent} or not less than the thickness of the partition wall, and its upper limit can be made large up to the length of opposite sides (see Figure 2) out of the contour lines of substantial hexagons of two adjacent inlet flow passages 70Hᵢₙ in the central partition walls 10_{cent}.

An aperture ratio on the inlet end face 10Eᵢₙ can be made larger than an aperture ratio on the outlet end face 10Eₒᵤₜ.

In the embodiment, an axial-directional length Hₒᵤₜ of the outlet-side inclined partition wall 10ₒᵤₜ is 4 mm or more. The upper limit of Hₒᵤₜ does not specially exist but it can be set, for example, to be 20 mm or less. An axial-directional length Hᵢₙ of the inlet-side inclined partition wall 10ᵢₙ is not specially limited but it can be set, for example, to be 4 mm or more, and also, to be 20 mm or less.

Notably, the axial-directional lengths Hᵢₙ and Hₒᵤₜ of the inclined partition walls can also have dispersions on the individual flow passages, and in such a case, the arithmetic mean of those only has to satisfy the aforementioned requirement.

The material of the honeycomb structured body 10 is porous ceramics, which have pores that gas can pass through, and on the other hand, that can capture particles such as soot. Examples of the ceramics include aluminum titanate, silicon carbide and cordierite. Aluminum titanate can contain magnesium, silicon and the like. The porosity of the partition wall of the honeycomb structured body 10 can be set, for example, to be 40 to 70%.

A catalyst may be supported on the surface of the honeycomb structured body 10. Examples of the catalyst include particles of at least one metal element selected from the group consisting of Pt, Pd, Rh, silver, vanadium, chromium, manganese, iron, cobalt, nickel and copper, or a zeolite catalyst. The particle diameter of the catalyst can be set, for example, to be 1 nm to 10 µm.

While the catalyst may be directly supported on the surface of the honeycomb structured body 10, it can also be held on a support held on the honeycomb structured body. The support sometimes functions as a co-catalyst.

Examples of the support include particles of oxides such as alumina, silica, magnesia, titania, zirconia, ceria, La₂O₃, BaO and zeolite, or composite oxides containing one or more of these. The particle diameter of the support can be set, for example, to be 0.1 to 100 µm.

Subsequently, operation of the honeycomb filter according to the embodiment is described. As compared with a honeycomb filter 100 in which flow passages are closed with plugs, the honeycomb filter 100 as above can have a lower initial pressure loss. Specifically, the effect of reducing a pressure loss by an end surface of the inlet flow passage 70Hᵢₙ being set to be an inclined surface by the outlet-side inclined partition wall 10ₒᵤₜ is high. In particular, since in the embodiment, the axial-directional length Hₒᵤₜ of the outlet-side inclined partition wall 10ₒᵤₜ is 4 mm or more, the end surface is sufficiently inclined relative to the axis as compared with the case where the end surface of the inlet flow passage 70Hᵢₙ is orthogonal to the axis of the flow passage as in conventional plug closing, and hence, sufficient reduction of the pressure loss is possible. Accordingly, an initial pressure loss of the honeycomb filter 100 can be suppressed.

Subsequently, a method for producing such a honeycomb filter is described. First, a ceramic raw material undergoes extrusion molding by an extrusion molding machine to produce a honeycomb compact having the same sectional shape as that of the central partition walls 10_{cent}. This honeycomb compact has unclosed inlet flow passages 70Hᵢₙ and unclosed outlet flow passages 70Hₒᵤₜ in the state of these being penetrated.

The composition of the ceramic raw material only has to be one with which porous ceramics are given after firing it. For example, it can contain the ceramic raw material, an organic binder, a pore-forming agent, a solvent, and an additive which is added as needed.

The ceramic raw material is powder containing elements composing the ceramics. The binder can be an organic binder, and examples thereof include: celluloses such as methylcelluloses, carboxymethylcelluloses, hydroxyalkylmethylcelluloses and sodium carboxymethylcelluloses; alcohols such as poly(vinyl alcohol); and lignin sulfonate salts. Examples of the additive include, for example, lubricants, plasticizers and dispersants.

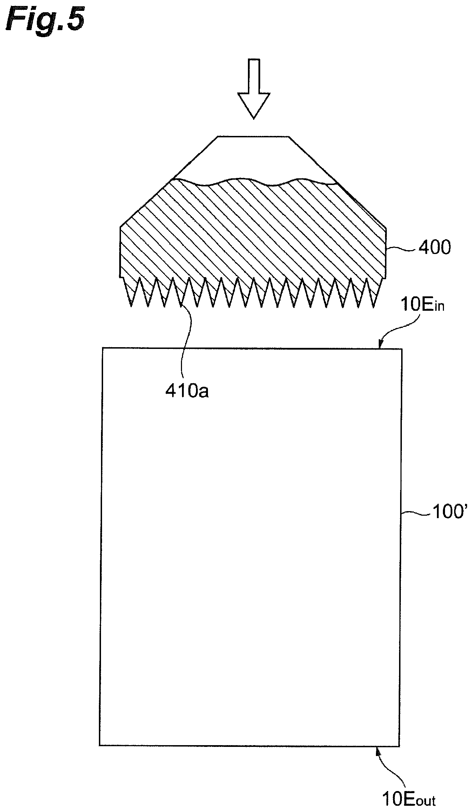

Subsequently, as shown in Figure 5, the inlet-side inclined partition walls 10ᵢₙ are formed on the inlet end face 10Eᵢₙ of an obtained unfired honeycomb compact 100'. Specifically, a closing jig 400 having many triangular pyramidal projections 410a is prepared. Then, the closing jig 400 is moved in such a way that each projection 410a comes into the inlet flow passage 70Hᵢₙ. In this way, the partition walls of the inlet flow passage 70Hᵢₙ are deformed and the sectional area of the flow passage is expanded, and meanwhile, the sectional areas of the outlet flow passages 70Hₒᵤₜ are shrunk. Then, finally, as shown in Figure 3(a) and Figure 3(b), the sectional shapes of the inlet flow passages 70Hᵢₙ become triangular, and the partition walls are completely crimped in the outlet flow passages 70Hₒᵤₜ and the outlet flow passages 70Hₒᵤₜ are sealed. Namely, the outlet flow passages 70Hₒᵤₜ are closed on the inlet end face 10Eᵢₙ. Notably, vibration or ultrasonic waves may be given to the closing jig 400.

Next, likewise, the outlet-side inclined partition walls 10ₒᵤₜ are formed on the outlet end face 10Eₒᵤₜ. Projections of a closing jig inserted into the outlet flow passages 70Hₒᵤₜ can be set to be hexagonal pyramidal. After that, after drying as needed, the honeycomb compact 100' both of whose end faces have been sealed is fired to obtain the honeycomb structured body.

Subsequently, the catalyst can be supported on the honeycomb structured body 10 as needed by a known method.

Notably, the present invention is not limited to the aforementioned embodiment but various modifications thereof are possible. For example, arrangements of the inlet flow passages and the outlet flow passages, that is, the numbers of flow passages adjacent to each flow passage are also not limited to those in the aforementioned embodiment. For example, each flow passage can be arranged in such a way that one inlet flow passage 70Hᵢₙ is adjacent to four other inlet flow passages 70Hᵢₙ and adjacent to two outlet flow passages 70Hₒᵤₜ and that one outlet flow passage 70Hₒᵤₜ is adjacent to six inlet flow passages 70Hᵢₙ and not adjacent to the other outlet flow passages 70Hₒᵤₜ. Notably, in the present specification, that "two flow passages are adjacent to each other" can mean that two flow passages are separated from each other via one partition wall in the thickness direction of the partition wall.

Moreover, any shapes of the inclined partition walls are sufficient as long as the sectional area of each inlet flow passage is shrunk and the sectional area of each outlet flow passage is expanded from the central partition walls toward the other end face, and detailed shapes can be properly modified in accordance with the sectional shape of each flow passage and the arrangement of the flow passages.

Moreover, the sectional shape of the flow passage is not specially limited to that in the aforementioned embodiment but a polygon such as a tetragon or an octagon, a circle, or the like is possible.

Moreover, while the honeycomb structured body 10 of the aforementioned embodiment has a structure having inlet inclined partition walls on the inlet side, implementation thereof is possible even with a structure in which the inlet flow passages are closed with plugs at the inlet end and which does not have the inlet-side inclined partition walls.

Furthermore, the external shape of the filter does not have to be a cylindrical body but may be, for example, a quadrangular prism.

### Examples

### (Reference Example 1)

A cordierite-made porous honeycomb structured body onto which a catalyst was not adhered and that had a structure as shown in Figure 1 to Figure 4 for the aforementioned embodiment was prepared. The outer diameter was 118.4 mm, the length was 113.4 mm, the cell density was 360 cpsi, the wall thickness was 10 mil (0.25 mm), the aperture ratio at the inlet end was 42%, the aperture ratio at the outlet end was 27%, the porosity of the partition walls was 58%, and the average pore diameter was 18 µm. The axial-directional length Hᵢₙ of the inlet-side inclined partition walls and the axial-directional length Hₒᵤₜ of the outlet-side inclined partition walls were set to be 2 to 3 mm (2.5 mm on average) and 2 to 3 mm (2.5 mm on average), respectively. A pressure loss when air at 600 Nm₃/h was fed at room temperature was 5.80 kPa.

### (Reference Example 2)

This was set to be the same as Reference Example 1 except that the axial-directional length Hᵢₙ of the inlet-side inclined partition walls was set to be 0, that is, the inlet side was closed with plugs. The pressure loss was 6.00 kPa.

### (Reference Example 3)

This was set to be the same as Reference Example 1 except that the axial-directional length Hₒᵤₜ of the outlet-side inclined partition walls was set to be 0, that is, the outlet side was closed with plugs. The pressure loss was 6.86 kPa.

### (Reference Example 4)

This was set to be the same as Reference Example 1 except that the axial-directional length Hᵢₙ of the inlet-side inclined partition walls was set to be 0 and the axial-directional length Hₒᵤₜ of the outlet-side inclined partition walls, that is, both the inlet side and the outlet side were closed with plugs. The pressure loss was 7.67 kPa.

It is found from these experiments that to provide the inclined partition walls on the outlet side is more effective for reduction of a pressure loss than to provide the inclined partition walls on the inlet side.

### (Comparative Example 1)

The cell density was changed from 360 cpsi to 250 cpsi. Due to the change of the cell density, the inlet-side aperture ratio became 43% from 42%, and the outlet-side aperture ratio became 30% from 27%. This was set to be the same as Reference Example 1 except the above. The pressure loss was 4.46 kPa.

### (Example 1)

This was set to be the same as Comparative Example 1 except that the axial-directional length Hₒᵤₜ of the outlet-side inclined partition walls was set to be 4 to 5 mm (4.5 mm on average). The pressure loss was 4.18 kPa.

Table 1 presents the results.

**[Table 1]**

| Table 1 | Cell Density [cpsi] | Wall Thickness [mil] | Inlet-Side Aperture Ratio [%] | Outlet-Side Aperture Ratio [%] | Hin [mm] | Hout [mm] | Pressure Loss at 600 Nm³/h [kPa] |
|---|---|---|---|---|---|---|---|
| Reference Example 1 | 360 | 10 | 42 | 27 | 2.5 mm on Average | 2.5 mm on Average | 5.80 |
| Reference Example 2 | 360 | 10 | 42 | 27 | 0 | 2.5 mm on Average | 6.00 |
| Reference Example 3 | 360 | 10 | 42 | 27 | 2.5 mm on Average | 0 | 6.86 |
| Reference Example 4 | 360 | 10 | 42 | 27 | 0 | 0 | 7.67 |
| Comparative Example 1 | 250 | 10 | 43 | 30 | 2.5 mm on Average | 2.5 mm on Average | 4.46 |
| Example 1 | 250 | 10 | 43 | 30 | 2.5 mm on Average | 4.5 mm on Average | 4.18 |

### Reference Signs List

70Hᵢₙ Inlet flow passage (first flow passage)
70Hₒᵤₜ Outlet flow passage (second flow passage)
10 Honeycomb structured body
10_{cent} Central partition wall
10ₒᵤₜ Outlet-side inclined partition wall (other-end-side inclined partition wall)
10ᵢₙ Inlet-side inclined partition wall (one-end-side inclined partition wall)
10Eᵢₙ Inlet end face (one end face)
10Eₒᵤₜ Outlet end face (the other end face)
100 Honeycomb filter
W Portion separating two flow passages
Hᵢₙ Axial-directional length of the inlet-side inclined partition wall
(one-end-side inclined partition wall)
Hₒᵤₜ Axial-directional length of the outlet-side inclined partition wall (other-end-side inclined partition wall)
400 Closing jig
410a Projection

## Claims

1. A column-shaped porous honeycomb structured body which forms a plurality of first flow passages that are opened on one end face and closed on the other end face and a plurality of second flow passages that are closed on the one end face and opened on the other end face, the honeycomb structured body comprising:
central partition walls where sectional areas of each first flow passage and each second flow passage are individually constant in an axial direction; and
other-end-side inclined partition walls where the sectional area of each first flow passage is shrunk and the sectional area of each second flow passage is expanded from the central partition walls toward the other end face, wherein
an axial-directional length of the other-end-side inclined partition wall is 4 mm or more.

2. The honeycomb structured body according to claim 1, wherein the axial-directional length of the other-end-side inclined partition wall is 20 mm or less.

3. The honeycomb structured body according to claim 1 or 2, further comprising one-end-side inclined partition walls where the sectional area of each first flow passage is expanded and the sectional area of each second flow passage is shrunk from the central partition walls toward the one end face.

4. The honeycomb structured body according to any one of claims 1 to 3, wherein the one end face is an inlet side of gas and the other end face is an outlet side of the gas.

5. A honeycomb filter comprising:
the honeycomb structured body according to any one of claims 1 to 4; and
a catalyst.
